**Europäisches Patentamt**

(19) **European Patent Office**

**Office européen des brevets**

(11) Numéro de publication: **0 190 525**

**B1**

(12) **FASCICULE DE BREVET EUROPÉEN**

(45) Date de publication du fascicule du brevet:
04.11.87

(51) Int. Cl.⁴: **B 60 R 25/04**

(21) Numéro de dépôt: **85402514.5**

(22) Date de dépôt: **17.12.85**

(54) Dispositif anti-vol notamment pour véhicule automobile.

(30) Priorité: **18.12.84 FR 8419793**

(43) Date de publication de la demande:
**13.08.86 Bulletin 86/33**

(45) Mention de la délivrance du brevet:
**04.11.87 Bulletin 87/45**

(84) Etats contractants désignés:
**DE GB IT**

(56) Documents cité:
**WO-A-81/03002**
**GB-A-2 069 207**
**US-A-4 192 400**
**US-A-4 288 778**

(73) Titulaire: **AUTOMOBILES PEUGEOT, 75, avenue de la Grande Armée, F-75116 Paris (FR)**
Titulaire: **AUTOMOBILES CITROEN, 62 Boulevard Victor- Hugo, F-92200 Neuilly- sur- Seine (FR)**

(72) Inventeur: **Herbault, Patrick Jean- Pierre, 94, rue Thiers, F-92100 Boulogne s/Seine (FR)**

(74) Mandataire: **Boivin, Claude, 9, rue Edouard- Charton, F-78000 Versailles (FR)**

## Description

Un dispositif anti-vol comporte généralement un boîtier de commande qui est relié à un périphérique par exemple dans le cas d'un véhicule automobile, au dispositif d'allumage ou au démarreur pour les inhiber, c'est-à-dire les empêcher de fonctionner quand le dispositif anti-vol est en service, ou à une sirène qui doit fonctionner, par exemple en cas de tentative d'effraction.

Si la mise en action du dispositif anti-vol se concrétise par la mise sous tension d'un élément inhibant le dispositif d'allumage ou le démarreur ou permettant au contraire le fonctionnement de la sirène, il est facile de rendre inefficace le dispositif anti-vol; il suffit pour cela de couper le conducteur reliant le boîtier de commande au périphérique. Il en serait de même si le boîtier de commande mettait ce conducteur à la masse quand le dispositif anti-vol est en service et à la tension d'alimentation de la batterie quand il est hors service; il suffirait alors de relier le conducteur de liaison au pôle positif de la batterie.

La présente invention a pour objet un dispositif anti-vol perfectionné de manière à remédier à cet inconvénient.

Ce dispositif est caractérisé en ce que le boîtier de commande comporte une source d'impulsions ou horloge et des moyens pour envoyer des impulsions dans le conducteur de liaison quand on désire mettre le dispositif anti-vol hors service, et en ce que le périphérique est relié au conducteur par une liaison capacitive et comporte des moyens sensibles à la réception des impulsions pour permettre ou empêcher le fonctionnement du périphérique suivant la présence respectivement l'absence d'impulsions dans le conducteur.

Lorsque le dispositif anti-vol est en service, le boîtier de commande n'envoie pas d'impulsions au périphérique. Dans le cas où ce dernier est le dispositif d'allumage ou le démarreur son fonctionnement est inhibé; si le périphérique est une sirène, elle est prête à fonctionner en cas d'effraction. La mise à la masse ou la connection à la batterie du conducteur est sans effet sur le périphérique étant donné sa liaison capacitive au conducteur. On ne peut mettre le dispositif anti-vol hors action qu'en envoyant au périphérique des impulsions de fréquence déterminée.

Dans un mode de réalisation particulier de l'invention, les moyens sensibles à la réception des impulsions comprennent un condensateur connecté à une source d'alimenttation en série avec une résistance, des moyens commandés par les impulsions pour mettre le condensateur en court-circuit, et des moyens pour comparer la tension du condensateur à une tension de référence et fournir un signal permettant ou inhibant le fonctionnement du périphérique.

On a décrit ci-après, à titre d'exemple non limitatif, deux modes de réalisation du dispositif anti-vol selon l'invention, avec référence au dessin annexé dans lequel :

La Figure 1 est un schéma du dispositif, dans un premier mode de réalisation;

La Figure 2a montre en fonction du temps la tension à la sortie du boîtier de commande;

La Figure 2b montre en fonction du temps la tension aux bornes du condensateur;

La Figure 2c montre la tension à la sortie du comparateur,

La Figure 3 montre un deuxième mode de réalisation des moyens incorporés au périphérique.

Tel qu'il est représenté au dessin, le dispositif selon l'invention comprend un boîtier anti-vol 1 destiné à parmettre l'utilisation d'un organe 2, qui est par exemple le dispositif d'allumage ou le démarreur d'un véhicule automobile.

Le boîtier 1 contient une horloge 3 qui est connectée à une porte $ET_4$ en même temps qu'un circuit 5 sur lequel est interposé un interrupteur 6. Celui-ci est normalement ouvert et peut être fermé par un utilisateur par exemple par affichage d'un code secret sur un clavier 7 quand il veut permettre le fonctionnement de l'organe 2.

La sortie de la porte 9 est connectée à la base d'un transistor 8, du type n-p-n, dont l'émetteur est à la masse. Le collecteur de ce transistor est connecté par un conducteur 9 à des moyens d'inhibition incorporés à l'organe 2. Ces moyens comprennent un condensateur de liaison 10 et une résistance 11 connectés en série entre le conducteur 9 et la base d'un transistor 12, de type n-p-n. L'émetteur de ce transistor est à la masse alors que son collecteur est lié en 13 à l'une des bornes d'un condensatour 14 dont la seconde borne est à la masse. La première borne de ce condensateur, c'est-à-dire le point 13, est en outre reliée au pôle positif de la source d'alimentation par une résistance 15 et à l'entrée "moins" d'un comparateur 16. L'entrée "plus" de celui-ci est reliée à une source de tension de référence E fournie par un diviseur de tension 17-18.

Ce comparateur fournit en S une tension positive si la tension aux bornes du condensateur 14 est supérieure à la tension de référence, et nulle dans le cas contraire.

La sortie S du comparateur 16 est connectée à l'organe 2 à inhiber de façon que cet organe soit inhibé dans le cas où une tension est présente en S.

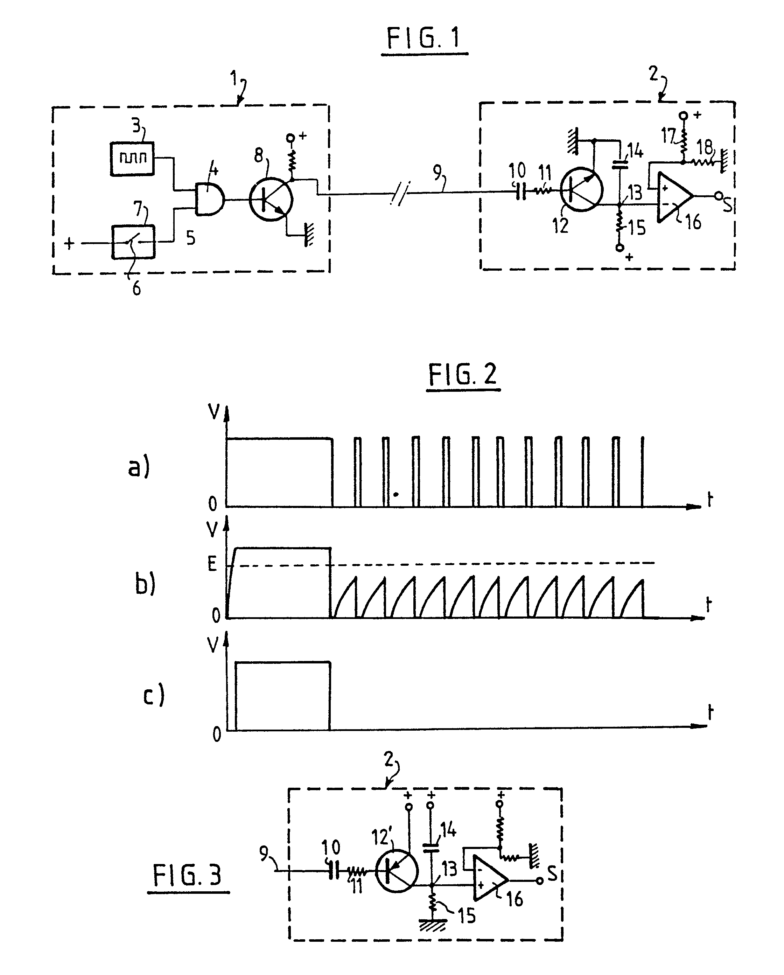

Quand l'interrupteur 6 est ouvert, la sortie de la porte $ET_4$ est au zéro et le transistor 8 est bloqué de sorte que la ligne 9 est à la tension V de la source d'alimentation (Figure 2a). Mais, du fait de la présence du condensateur de liaison 10, cette tension ne peut agir sur le transistor 12 qui reste bloqué; lors de la mise en service, le condensateur 14 se charge vers la tension d'alimentation, avec une constante de temps égale à RC, R et C étant les valeurs de la résistance 15 et du condensateur 14 (Figure 2b). La tension au collecteur du transistor 12 prend la tension V supérieure à E et la sortie S est à une tension positive voisine de V (Figure 2c). L'organe 2 est inhibé.

Lorsqu'on ferme l'interrupteur 6, par exemple en affichant le code correct, la porte ET$_4$ laisse passer les impulsions qui sont transmises à la ligne 9 par le transistor 8. Ces impulsions sont transmises par le condensateur 10 et commandent le transistor 12. Pendant une impulsion, le transistor devient passant de sorte que le condensateur 14, mis en court-circuit, se décharge immédiatement et revient à un potentiel pratiquement nul. La tension en S devient nulle et l'organe 2 peut fonctionner. Entre deux impulsions, le transistor 12 se bloque et le condensateur 14 se charge. Mais la fréquence des impulsions fournie par l'horloge est facilement choisie en fonction de la constante de temps RC de façon que, entre deux impulsions, la tension du condensateur 14 ne puisse atteindre la valeur E (voir Figure 2b).

La tension en S reste donc nulle et l'organe 2 peut continuer de fonctionner.

On remarque que, si l'on coupe le conducteur 9 pendant que l'organe 2 est inhibé, cette manoeuvre est sans effet; le transistor 12 reste bloqué et l'organe 2 inhibé. Il en est de même si le conducteur 9 était mis à la masse.

La sortie S pourrait également commander une sirène. Dans ce cas, le circuit d'alimentation de cette sirène comporterait un interrupteur fermé par exemple lors de l'ouverture d'une porte du véhicule et un moyen coupant l'alimentation quand la tension en S est nulle, en l'assurant au contraire si cette tension a pour valeur V.

Dans la variante de la Figure 3, le transistor 12 a été remplacé par un transistor 12', du type p-n-p. Dans ce cas l'émetteur du transistor est connecté au pôle positif de la source d'alimentation, alors que son collecteur est connecté en 13 à la masse par l'intermédiaire de la résistance 15, à l'entrée "plus" du comparateur 16 et à l'une des bornes du condensateur 14 dont l'autre borne est reliée au pôle positif.

En l'absence d'impulsions, le transistor 12 est bloqué de sorte que le point 13 est à la masse, le condensateur s'étant chargé lors de la mise en service. Après une impulsion, le transistor 12' devient passant, le condensateur 14 est mis en court-circuit et le point 13 est porté à la tension V. Puis la tension en 13 baisse jusqu'au front arrière de l'impulsion suivante. Mais la constante de temps RC et la fréquence des impulsions sont choisies de façon que la tension en 13 ne puisse descendre en-dessous de la valeur de seuil E. Le signal de sortie en S est donc nul.

## Revendications

1. Dispositif anti-vol comprenant un boîtier de commande (1) relié à un périphérique (2) par un conducteur (9), caractérisé en ce que le boîtier de commande (1) comporte une source d'impulsions ou horloge (3) et des moyens (3-8) pour envoyer des impulsions dans le conducteur de liaison (9) lorsqu'on désire mettre le dispositif anti-vol hors service, et en ce que le périphérique (2) est relié au conducteur (9) par une liaison capacitive (10) et comporte des moyens (12-15) sensibles à la réception des impulsions pour permettre - ou empêcher le fonctionnement du périphérique (2) suivant la présence respectivement l'absence d'impulsions dans le conducteur (9).

2. Dispositif anti-vol selon la revendication 1, caractérisé en ce que les moyens sensibles à la réception des impulsions comprennent un condensateur (14) connecté à une source d'alimentation en série avec une résistance (15), des moyens (12 ou 12') commandés par les impulsions pour mettre le condensateur (14) en court-circuit, et des moyens (16) pour comparer la tension du condensateur (14) à une tension de référence et fournir un signal permettant ou inhibant le fonctionnement du périphérique (2).

3. Dispositif anti-vol selon la revendication 2, caractérisé en ce que les moyens (12 ou 12') commandés par les impulsions sont constitués par un transistor dont la base est connectée au conducteur (9) par l'intermédiaire de la liaison capacitive (10).

## Patentansprüche

1. Diebstahlsicherungseinrichtung mit einem Steuergehäuse (1), das über eine Leitung (9) mit einem peripheren Gerät (2) verbunden ist, dadurch gekennzeichnet, daß das Steuergehäuse (1) einen Impuls- oder Taktgeber (3) enthält und Mittel (3-8) zum Aussenden von Impulsen in die Verbindungsleitung (9), wenn die Diebstahlsicherungseinrichtung außer Betrieb gesetzt werden soll, und daß das periphere Gerät (2) mit der Leitung (9) über ein kapazitives Koppelglied (10) verbunden ist und Mittel (12-15) aufweist, welche auf den Empfang von Impulsen ansprechen, um das Wirksamwerden des peripheren Gerätes (2) in Abhängigkeit von dem Vorhandensein bzw. der Abwesenheit von Impulsen in der Leitung (9) zuzulassen oder zu verhindern.

2. Diebstahlsicherungseinrichtung nach Anspruch 1, dadurch gekennzeichnet, daß die auf den Empfang von Impulsen ansprechenden Mittel einen Kondensator (14) aufweisen, der in Serie mit einem Widerstand (15) mit einer Spannungsquelle verbunden ist, sowie von den Impulsen angesteuerte Mittel (12 oder 12'), um den Kondensator (14) kurzzuschlienen und Mittel (16), um die Spannung des Kondensators (14) mit einer Referenzspannung zu vergleichen und ein Signal zu erzeugen, das das Wirksamwerden des peripheren Gerätes zuläßt oder verhindert.

3. Diebstahlsicherungseinrichtung nach Anspruch 2, dadurch gekennzeichnet, daß die von den Impulsen angesteuerten Mittel (12 oder 12') durch einen Transistor gebildet werden, dessen Basis mit der Leitung (9), unter Zwischenschaltung des kapazitiven Koppelgliedes (10) verbunden ist.

## Claims

1. Thief proof device including a control box (1) connected to a peripheral (2) by a conductor (9) characterized in that the control box (1) includes a pulse source or clock (3) and means (3-8) for sending pulses over the connecting conductor (9) when it is desired to put the thief proof device out of service, and in that the peripheral (2) is connected to the conductor (9) by a capacitive connection (10) and comprises means (12-15) responsive to the reception of pulses for allowing or preventing the operation of the peripheral (2) depending on the presence respectively the absence of pulses in the conductor (9).

2. Thief proof device according to claim 1, characterized in that the means responsive to the reception of pulses include a capacitor (14) connected to a power supply source in series with the resistor (15), means (12 or 12') controlled by the pulses for short circuiting the capacitor (14) and means (16) for comparing the voltage of the capacitor (14) with a reference voltage and for delivering a signal allowing or inhibiting the operation of the peripheral (2).

3. Thief proof device according to claim 2, characterized in that the means (12 or 12') controlled by the pulses are formed by a transistor whose base is connected to the conductor (9) through the capacitive connection (10).

# FIG. 1

# FIG. 2

a)

b)

c)

# FIG. 3